(19) Europäisches Patentamt
European Patent Office
Office européen des brevets

(11) EP 4 538 327 A1

(12) EUROPEAN PATENT APPLICATION

(43) Date of publication:
**16.04.2025 Bulletin 2025/16**

(21) Application number: **23203052.8**

(22) Date of filing: **11.10.2023**

(51) International Patent Classification (IPC):
***C08L 69/00*** *(2006.01)*

(52) Cooperative Patent Classification (CPC):
(C-Sets available)
**C08L 69/00** (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **SHPP Global Technologies B.V.**
**4612 PX Bergen op Zoom (NL)**

(72) Inventors:
- **CHEN, Keran**
  **Shanghai (CN)**
- **SHAN, Wei**
  **Shanghai (CN)**
- **ZHENG, Yun**
  **Shanghai (CN)**

(74) Representative: **Modiano, Gabriella Diana et al**
**Modiano & Partners SA**
**Steinsdorfstraße 14**
**80538 München (DE)**

# (54) FLAME RETARDANT POLYCARBONATE COMPOSITIONS HAVING IMPROVED HYDROLYTIC STABILITY

(57) Thermoplastic compositions include: from about 10 wt% to about 99 wt% of a polycarbonate homopolymer component; from about 1 wt% to about 40 wt% of a polycarbonate-siloxane copolymer component; from about 0.1 wt% to about 15 wt% of a phosphorous-based flame retardant; and from about 0.01 wt% to about 5 wt% zirconium phosphate. The polycarbonate homopolymer component has improved molecular weight (Mw) retention properties after heat aging in high temperature and relative humidity conditions. The compositions also have good low temperature impact properties.

EP 4 538 327 A1

(52) Cooperative Patent Classification (CPC): (Cont.)

C-Sets
**C08L 69/00, C08L 83/10, C08K 5/0066,**
**C08K 3/016;**
**C08L 69/00, C08L 83/10, C08K 5/0066,**
**C08K 3/32;**
**C08L 69/00, C08L 83/10, C08K 5/49, C08K 3/016;**
**C08L 69/00, C08L 83/10, C08K 5/49, C08K 3/32;**
**C08L 69/00, C08L 83/10, C08K 5/5313,**
**C08K 3/016;**
**C08L 69/00, C08L 83/10, C08K 5/5313, C08K 3/32**

## Description

### FIELD OF THE DISCLOSURE

The present disclosure relates to polycarbonate-based thermoplastic compositions, and in particular to thermoplastic compositions including polycarbonate and zirconium phosphate that have good hydro-stability properties.

### BACKGROUND OF THE DISCLOSURE

Polycarbonate polymers are widely used in numerous applications such as electronics, household appliances, and building materials. To achieve UL94 flame retardancy (FR) for particular applications, an FR agent such as phosphorous is typically added to the polycarbonate composition. To further improve the FR rating of the polycarbonate composition, an FR synergist such as talc may be added. Phosphorous FR agents are acidic in nature, which could potentially decrease the hydrolytic stability of the polycarbonate matrix. Inorganic fillers also decrease the hydro-stability of polycarbonate after damp heat (DH) aging, for example a DH85 treatment at 85 °C and 85% relative humidity at various durations (e.g., 500hrs, 1000hrs, 2000hrs, and 3000hrs).

These and other shortcomings are addressed by aspects of the present disclosure.

### SUMMARY

Aspects of the disclosure relate to thermoplastic compositions including: from about 10 wt% to about 99 wt% of a polycarbonate homopolymer component; from about 1 wt% to about 40 wt% of a polycarbonate-siloxane copolymer component; from about 0.1 wt% to about 15 wt% of a phosphorous-based flame retardant; and from about 0.01 wt% to about 5 wt% zirconium phosphate. The polycarbonate homopolymer component has improved molecular weight (Mw) retention properties after heat aging in high temperature and relative humidity conditions. The compositions also have good low temperature impact properties.

### DETAILED DESCRIPTION

Before the present compounds, compositions, articles, systems, devices, and/or methods are disclosed and described, it is to be understood that they are not limited to specific synthetic methods unless otherwise specified, or to particular reagents unless otherwise specified, as such can, of course, vary. It is also to be understood that the terminology used herein is for the purpose of describing particular aspects only and is not intended to be limiting.

Various combinations of elements of this disclosure are encompassed by this disclosure, e.g., combinations of elements from dependent claims that depend upon the same independent claim.

Moreover, it is to be understood that unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is in no way intended that an order be inferred, in any respect. This holds for any possible non-express basis for interpretation, including: matters of logic with respect to arrangement of steps or operational flow; plain meaning derived from grammatical organization or punctuation; and the number or type of aspects described in the specification.

All publications mentioned herein are incorporated herein by reference to disclose and describe the methods and/or materials in connection with which the publications are cited.

### Definitions

It is also to be understood that the terminology used herein is for the purpose of describing particular aspects only and is not intended to be limiting. As used in the specification and in the claims, the term "comprising" can include the aspects "consisting of" and "consisting essentially of." Unless defined otherwise, all technical and scientific terms used herein have the same meaning as commonly understood by one of ordinary skill in the art to which this disclosure belongs. In this specification and in the claims which follow, reference will be made to a number of terms which shall be defined herein.

As used in the specification and the appended claims, the singular forms "a," "an" and "the" include plural referents unless the context clearly dictates otherwise. Thus, for example, reference to "a polycarbonate homopolymer" includes mixtures of two or more polycarbonate homopolymers.

As used herein, the term "combination" is inclusive of blends, mixtures, alloys, reaction products, and the like.

Ranges can be expressed herein as from one value (first value) to another value (second value). When such a

range is expressed, the range includes in some aspects one or both of the first value and the second value. Similarly, when values are expressed as approximations, by use of the antecedent 'about,' it will be understood that the particular value forms another aspect. It will be further understood that the endpoints of each of the ranges are significant both in relation to the other endpoint, and independently of the other endpoint. It is also understood that there are a number of values disclosed herein, and that each value is also herein disclosed as "about" that particular value in addition to the value itself. For example, if the value "10" is disclosed, then "about 10" is also disclosed. It is also understood that each unit between two particular units are also disclosed. For example, if 10 and 15 are disclosed, then 11, 12, 13, and 14 are also disclosed.

As used herein, the terms "about" and "at or about" mean that the amount or value in question can be the designated value, approximately the designated value, or about the same as the designated value. It is generally understood, as used herein, that it is the nominal value indicated $\pm 10\%$ variation unless otherwise indicated or inferred. The term is intended to convey that similar values promote equivalent results or effects recited in the claims. That is, it is understood that amounts, sizes, formulations, parameters, and other quantities and characteristics are not and need not be exact, but can be approximate and/or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly stated to be such. It is understood that where "about" is used before a quantitative value, the parameter also includes the specific quantitative value itself, unless specifically stated otherwise.

Disclosed are the components to be used to prepare the compositions of the disclosure as well as the compositions themselves to be used within the methods disclosed herein. These and other materials are disclosed herein, and it is understood that when combinations, subsets, interactions, groups, etc. of these materials are disclosed that while specific reference of each various individual and collective combinations and permutation of these compounds cannot be explicitly disclosed, each is specifically contemplated and described herein. For example, if a particular compound is disclosed and discussed and a number of modifications that can be made to a number of molecules including the compounds are discussed, specifically contemplated is each and every combination and permutation of the compound and the modifications that are possible unless specifically indicated to the contrary. Thus, if a class of molecules A, B, and C are disclosed as well as a class of molecules D, E, and F and an example of a combination molecule, A-D is disclosed, then even if each is not individually recited each is individually and collectively contemplated meaning combinations, A-E, A-F, B-D, B-E, B-F, C-D, C-E, and C-F are considered disclosed. Likewise, any subset or combination of these is also disclosed. Thus, for example, the sub-group of A-E, B-F, and C-E would be considered disclosed. This concept applies to all aspects of this application including, but not limited to, steps in methods of making and using the compositions of the disclosure. Thus, if there are a variety of additional steps that can be performed it is understood that each of these additional steps can be performed with any specific aspect or combination of aspects of the methods of the disclosure.

References in the specification and concluding claims to parts by weight of a particular element or component in a composition or article, denotes the weight relationship between the element or component and any other elements or components in the composition or article for which a part by weight is expressed. Thus, in a compound containing 2 parts by weight of component X and 5 parts by weight component Y, X and Y are present at a weight ratio of 2:5, and are present in such ratio regardless of whether additional components are contained in the compound.

A weight percent of a component, unless specifically stated to the contrary, is based on the total weight of the formulation or composition in which the component is included.

As used herein, the terms "number average molecular weight" or "$M_n$" can be used interchangeably, and refer to the statistical average molecular weight of all the polymer chains in the sample and is defined by the formula:

$$M_n = \frac{\sum N_i M_i}{\sum N_i},$$

where $M_i$ is the molecular weight of a chain and $N_i$ is the number of chains of that molecular weight. $M_n$ can be determined for polymers, e.g., polycarbonate polymers, by methods well known to a person having ordinary skill in the art using molecular weight standards, e.g. polycarbonate standards or polystyrene standards, preferably certified or traceable molecular weight standards.

As used herein, the terms "weight average molecular weight" or "$M_w$" can be used interchangeably, and are defined by the formula:

$$M_w = \frac{\sum N_i M_i^{2}}{\sum N_i M_i},$$

where $M_i$ is the molecular weight of a chain and $N_i$ is the number of chains of that molecular weight. Compared to $M_n$, $M_w$

takes into account the molecular weight of a given chain in determining contributions to the molecular weight average. Thus, the greater the molecular weight of a given chain, the more the chain contributes to the $M_w$. $M_w$ can be determined for polymers, e.g., polycarbonate polymers, by methods well known to a person having ordinary skill in the art using molecular weight standards, e.g., polycarbonate standards or polystyrene standards, preferably certified or traceable molecular weight standards.

As used herein, the terms "polydispersity index" or "PDI" can be used interchangeably, and are defined by the formula:

$$PDI = \frac{M_w}{M_n}.$$

The PDI has a value equal to or greater than 1, but as the polymer chains approach uniform chain length, the PDI approaches unity.

The terms "BisA," "BPA," or "bisphenol A," which can be used interchangeably, as used herein refers to a compound having a structure represented by the formula:

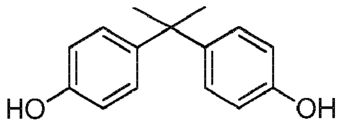

BisA can also be referred to by the name 4,4'-(propane-2,2-diyl)diphenol; p,p'-isopropylidenebisphenol; or 2,2-bis(4-hydroxyphenyl)propane. BisA has the CAS # 80-05-7.

As used herein, "polycarbonate" refers to an oligomer or polymer including residues of one or more dihydroxy compounds, e.g., dihydroxy aromatic compounds, joined by carbonate linkages; it also encompasses homopolycarbonates, copolycarbonates, and (co)polyester carbonates.

The terms "residues" and "structural units", used in reference to the constituents of the polymers, are synonymous throughout the specification.

As used herein the terms "weight percent," "wt%," and "wt. %," which can be used interchangeably, indicate the percent by weight of a given component based on the total weight of the composition, unless otherwise specified. That is, unless otherwise specified, all wt% values are based on the total weight of the composition. It should be understood that the sum of wt% values for all components in a disclosed composition or formulation are equal to 100.

Unless otherwise stated to the contrary herein, all test standards are the most recent standard in effect at the time of filing this application.

Each of the raw materials used in example and/or comparative compositions described herein are either commercially available and/or the methods for the production thereof are known to those of skill in the art.

It is understood that the compositions disclosed herein have certain functions. Disclosed herein are certain structural requirements for performing the disclosed functions and it is understood that there are a variety of structures that can perform the same function that are related to the disclosed structures, and that these structures will typically achieve the same result.

## Thermoplastic Compositions

Aspects of the disclosure relate to thermoplastic compositions including: from about 10 wt% to about 99 wt% of a polycarbonate homopolymer component; from about 1 wt% to about 40 wt% of a polycarbonate-siloxane copolymer component; from about 0.1 wt% to about 15 wt% of a phosphorous-based flame retardant; and from about 0.01 wt% to about 5 wt% zirconium phosphate. The combined weight percent value of all components does not exceed 100 wt%, and all weight percent values are based on the total weight of the composition.

The polycarbonate homopolymer component may include bisphenol-A (BPA) homopolymer in some aspects. Suitable polycarbonate homopolymers are available from SABIC. In some aspects the polycarbonate homopolymer component includes at least two polycarbonate homopolymers, such as a combination of a low flow polycarbonate homopolymer and a high flow polycarbonate homopolymer. An exemplary low flow polycarbonate homopolymer is available from SABIC and is a bisphenol A polycarbonate (linear) endcapped with para-cumyl phenol having a Mw of about 15-35k and a melt flow rate (MFR) at 300 °C and 1.2 kg of about 15-30 g/10 min as determined in accordance with ASTM D1238. An exemplary high flow polycarbonate homopolymer is available from SABIC and is a bisphenol A polycarbonate (linear) endcapped with para-cumyl phenol having a Mw of about 40-55k and an MFR at 300 °C and 1.2 kg of about 4-12

g/10 min. MFR is determined in accordance with ASTM D1238.

The composition includes from about 10 wt% to about 99 wt% of the polycarbonate homopolymer component. In other aspects the composition includes at least 10 wt%, at least 15 wt%, at least 20 wt%, at least 25 wt%, at least 30 wt%, at least 35 wt%, at least 40 wt%, at least 45 wt%, at least 50 wt%, at least 55 wt%, at least 60 wt%, at least 65 wt%, at least 70 wt%, at most 99 wt%, at most 95 wt%, at most 90 wt%, at most 85 wt%, at most 80 wt%, or at most 75 wt% of the polycarbonate homopolymer component.

Compositions according to aspects of the disclosure include from about 1 wt% to about 40 wt% of a polycarbonate-siloxane copolymer component. In certain aspects the polycarbonate-siloxane copolymer component is present in an amount of at least 1 wt%, at least 3 wt%, at least 5 wt%, at least 7 wt%, at least 9 wt%, at least 11 wt%, at least 13 wt%, at least 15 wt%, at least 17 wt%, at least 19 wt%, at least 21 wt%, at most 40 wt%, at most 38 wt%, at most 36 wt%, at most 34 wt%, at most 32 wt%, at most 30 wt%, at most 28 wt%, at most 26 wt%, or at most 24 wt%.

In some aspects the polycarbonate copolymer component includes a polycarbonate-siloxane copolymer having a siloxane content of from about 5 wt% to about 45 wt%, based on the total weight of the polycarbonate-siloxane copolymer component. In further aspects the polycarbonate-siloxane copolymer has a siloxane content of from about 4-8 wt% (e.g., transparent EXL available from SABIC having a siloxane content of about 6 wt%), from about 15-25 wt% or in particular aspects 18-22 wt% (e.g., opaque EXL available from SABIC having a siloxane content of about 20 wt%), and/or from about 35-45 wt% (such as a 40 wt% siloxane copolymer available from SABIC).

In particular aspects the composition includes from about 0.1 wt% to about 15 wt% of a phosphorous-based flame retardant. In specific aspects the composition includes at least 0.1 wt%, at least 0.3 wt%, at least 0.5 wt%, at least 0.7 wt%, at least 1 wt%, at least 1.3 wt%, at least 1.7 wt%, at least 2 wt%, at least 2.3 wt%, at least 2.7 wt%, at least 3 wt%, at least 3.3 wt%, at least 3.7 wt%, at least 4 wt%, at least 4.3 wt%, at least 4.7 wt%, at least 5 wt%, at least 5.3 wt%, at least 5.7 wt%, at most 15 wt%, at most 14 wt%, at most 13 wt%, at most 12 wt%, at most 11 wt%, at most 10 wt%, at most 9 wt%, at most 8 wt%, at most 7 wt%, at most 6 wt%, at most 5 wt%, or at most 4 wt% of the phosphorous-based flame retardant. An exemplary phosphorous-based flame retardant includes, but is not limited to, phenoxy phosphazene.

In some aspects the composition includes from about 0.01 wt% to 1 wt% zirconium phosphate. The zirconium phosphate may act as a synergist to improve FR properties of the composition. It may also help to improve the hydrostability of the polycarbonate matrix, which is decreased by the phosphorous-based flame retardant. For example, compositions including zirconium phosphate may have improved Mw retention after 2000 hour DH85 treatment as compared to comparative compositions that do not include zirconium phosphate. In specific aspects the composition may include at least 0.01 wt%, or at least 0.03 wt%, or at least 0.03 wt%, or at least 0.05 wt%, or at least 0.07 wt%, or at least 0.09 wt%, or at least 0.1 wt%, or at least 0.2 wt%, or at least 0.3 wt%, or at least 0.4 wt%, or at least 0.5 wt%, or at most 1 wt%, or at most 0.9 wt%, or at most 0.8 wt%, or at most 0.7 wt%, or at most 0.6 wt%, or at most 0.5 wt%, or at most 0.4 wt%, or at most 0.3 wt%, or at most 0.2 wt% of the zirconium phosphate.

In certain aspects the composition includes from greater than 0 wt% to about 2 wt% of a polytetrafluoroethylene (PTFE) component, such as PTFE-encapsulated styrene acrylonitrile (SAN) copolymer. The PTFE component may provide additional FR properties to the composition.

In particular aspects the composition has a total siloxane content of from about 0.5 wt% to about 15 wt%. In certain aspects the composition has a total siloxane content of at least 0.5 wt%, or at least 1 wt%, or at least 1.5 wt%, or at least 2 wt%, or at least 2.5 wt%, or at least 3 wt%, or at least 3.5 wt%, or at least 4 wt%, or at most 15 wt%, or at most 14 wt%, or at most 13 wt%, or at most 12 wt%, or at most 11 wt%, or at most 10 wt%, or at most 9 wt%, or at most 8 wt%, or at most 7 wt%, or at most 6 wt%, or at most 5 wt%.

Compositions according to aspects of the disclosure may include from greater than 0 wt% to about 1 wt% of at least one additional additive. The additional additive may include, but is not limited to, an acid scavenger, an anti-drip agent, an antioxidant, an antistatic agent, a chain extender, a colorant, a release agent, a flow promoter, a lubricant, a plasticizer, a quenching agent, a UV reflecting additive, a blowing agent, a filler component, or a combination thereof. In some aspects the composition does not include a filler component. Exemplary filler components include, but are not limited to, glass fibers, glass spheres, glass flake, flaked silicon carbide, ceramic fibers, calcium carbonate, kaolin, mica, clay, talc, feldspar, fillite, quartz, quartzite, perlite, tripoli, and diatomaceous earth.

The compositions may have improved hydro-stability properties as compared to conventional compositions, such as those that do not include zirconium phosphate. In some aspects the polycarbonate homopolymer component has a molecular weight (Mw) retention of at least 60% after 2000 hours of heat aging at a temperature of 85 °C and 85% relative humidity.

In further aspects the compositions have good low temperature impact properties. In particular aspects the composition has a notched Izod impact strength (NII) of at least 450 joules per meter (J/m) at a temperature of -40 °C, wherein NII is evaluated according to ASTM D256.

## Methods of Manufacture

The one or any foregoing components described herein may be first dry blended with each other, or dry blended with any combination of foregoing components, then fed into an extruder from one or multi-feeders, or separately fed into an extruder from one or multi-feeders. The fillers used in the disclosure may also be first processed into a masterbatch, then fed into an extruder. The components may be fed into the extruder from a throat hopper or any side feeders.
The extruders used in the disclosure may have a single screw, multiple screws, intermeshing co-rotating or counter rotating screws, non-intermeshing co-rotating or counter rotating screws, reciprocating screws, screws with pins, screws with screens, barrels with pins, rolls, rams, helical rotors, co-kneaders, disc-pack processors, various other types of extrusion equipment, or combinations including at least one of the foregoing.
The components may also be mixed together and then melt-blended to form the thermoplastic compositions. The melt blending of the components involves the use of shear force, extensional force, compressive force, ultrasonic energy, electromagnetic energy, thermal energy or combinations including at least one of the foregoing forces or forms of energy.
The barrel temperature on the extruder during compounding can be set at the temperature where at least a portion of the polymer has reached a temperature greater than or equal to about the melting temperature, if the resin is a semi-crystalline organic polymer, or the flow point (e.g., the glass transition temperature) if the resin is an amorphous resin.
The mixture including the foregoing mentioned components may be subject to multiple blending and forming steps if desirable. For example, the thermoplastic composition may first be extruded and formed into pellets. The pellets may then be fed into a molding machine where it may be formed into any desirable shape or product. Alternatively, the thermoplastic composition emanating from a single melt blender may be formed into sheets or strands and subjected to post-extrusion processes such as annealing, uniaxial or biaxial orientation.
The temperature of the melt in the present process may in some aspects be maintained as low as possible in order to avoid excessive thermal degradation of the components. In certain aspects the melt temperature is maintained between about 230°C and about 350°C, although higher temperatures can be used provided that the residence time of the resin in the processing equipment is kept relatively short. In some aspects the melt processed composition exits processing equipment such as an extruder through small exit holes in a die. The resulting strands of molten resin may be cooled by passing the strands through a water bath. The cooled strands can be chopped into pellets for packaging and further handling.

## Articles of Manufacture

In certain aspects, the present disclosure pertains to shaped, formed, or molded articles including the thermoplastic compositions. The thermoplastic compositions can be molded into useful shaped articles by a variety of means such as injection molding, extrusion, rotational molding, blow molding and thermoforming to form articles and structural components of, for example, personal or commercial electronics devices, including but not limited to cellular telephones, tablet computers, personal computers, notebook and portable computers, and other such equipment, medical applications, RFID applications, automotive applications, and the like. In a further aspect, the article is extrusion molded. In a still further aspect, the article is injection molded. In specific aspects the article is a personal accessory, an energy storage device, an electrical device, or a vehicle interior.
Various combinations of elements of this disclosure are encompassed by this disclosure, e.g., combinations of elements from dependent claims that depend upon the same independent claim.

## Aspects of the Disclosure

In various aspects, the present disclosure pertains to and includes at least the following aspects.
Aspect 1. A thermoplastic composition comprising:

from about 10 wt% to about 99 wt% of a polycarbonate homopolymer component;
from about 1 wt% to about 40 wt% of a polycarbonate-siloxane copolymer component;
from about 0.1 wt% to about 15 wt% of a phosphorous-based flame retardant; and
from about 0.01 wt% to about 5 wt% zirconium phosphate,
wherein the combined weight percent value of all components does not exceed 100 wt%, and all weight percent values are based on the total weight of the composition.

Aspect 2. The thermoplastic composition according to Aspect 1, wherein the polycarbonate-siloxane copolymer has a siloxane content of from about 5 wt% to about 45 wt%, based on the total weight of the polycarbonate-siloxane copolymer component.
Aspect 3. The thermoplastic composition according to Aspect 2, wherein the polycarbonate-siloxane copolymer

has a siloxane content of from about 15 wt% to about 25 wt%.

Aspect 4. The thermoplastic composition according to any of Aspects 1 to 3, wherein the composition further comprises from greater than 0 wt% to about 2 wt% of a polytetrafluoroethylene (PTFE) component.

Aspect 5. The thermoplastic composition according to any of Aspects 1 to 4, wherein the composition comprises from about 0.01 wt% to 1 wt% zirconium phosphate.

Aspect 6. The thermoplastic composition according to any of Aspects 1 to 5, wherein the composition comprises at least 1.5 wt% of the phosphorous-based flame retardant.

Aspect 7. The thermoplastic composition according to any of Aspects 1 to 6, wherein the composition has a total siloxane content of from about 0.5 wt% to about 15 wt%.

Aspect 8. The thermoplastic composition according to Aspect 7, wherein the composition has a total siloxane content of from about 2 wt% to about 8 wt%.

Aspect 9. The thermoplastic composition according to any of Aspects 1 to 8, wherein the composition further comprises from greater than 0 wt% to about 1 wt% of at least one additional additive.

Aspect 10. The thermoplastic composition according to Aspect 9, wherein the at least one additional additive comprises an acid scavenger, an anti-drip agent, an antioxidant, an antistatic agent, a chain extender, a colorant, a release agent, a flow promoter, a lubricant, a plasticizer, a quenching agent, a UV reflecting additive, a blowing agent, a filler component, or a combination thereof.

Aspect 11. The thermoplastic composition according to any of Aspects 1 to 10, wherein the polycarbonate homopolymer component has a molecular weight (Mw) retention of at least 60% after 2000 hours of heat aging at a temperature of 85 °C and 85% relative humidity.

Aspect 12. The thermoplastic composition according to any of Aspects 1 to 11, wherein the composition has a notched Izod impact strength (NII) of at least 450 joules per meter (J/m) at a temperature of -40 °C, wherein NII is evaluated according to ASTM D256.

Aspect 13. An article comprising the thermoplastic composition according to any of Aspects 1 to 12.

Aspect 14. The article according to Aspect 13, wherein the article is a personal accessory, an energy storage device, an electrical device, or a vehicle interior.

## EXAMPLES

The following examples are put forth so as to provide those of ordinary skill in the art with a complete disclosure and description of how the compounds, compositions, articles, devices and/or methods claimed herein are made and evaluated, and are intended to be purely exemplary and are not intended to limit the disclosure. Efforts have been made to ensure accuracy with respect to numbers (e.g., amounts, temperature, etc.), but some errors and deviations should be accounted for. Unless indicated otherwise, parts are parts by weight, temperature is in °C or is at ambient temperature, and pressure is at or near atmospheric. Unless indicated otherwise, percentages referring to composition are in terms of wt%.

There are numerous variations and combinations of reaction conditions, e.g., component concentrations, desired solvents, solvent mixtures, temperatures, pressures and other reaction ranges and conditions that can be used to optimize the product purity and yield obtained from the described process. Only reasonable and routine experimentation will be required to optimize such process conditions.

Compositions described herein included components set forth in Table 1:

**Table 1 - Components Included in Compositions**

| Component | Description | CAS number | Product supplier | Function |
|---|---|---|---|---|
| Low flow PC homopolymer | Low flow linear polycarbonate | 111211-39-3 | SABIC | Resin |
| High flow PC homopolymer | High flow linear polycarbonate | 111211-39-3 | SABIC | Resin |
| PC-Siloxane copolymer | EXL Polycarbonate-siloxane copolymer (20 wt% Siloxane) | 202483-49-6 | SABIC | Resin |
| Zirconium phosphate | Zirconium phosphate | 13772-29-7 | NANUP | FR synergist |
| TSAN | PTFE encapsulated Styrene acrylonitrile copolymer | 9002-84-0/ 9003-54-7 | SABIC | FR |
| Phenoxy Phosphazene | FP-110 | NA | Fushimi | FR |

(continued)

| Component | Description | CAS number | Product supplier | Function |
|---|---|---|---|---|
| Other additives | Antioxidant, UV additive, mold release | Various | Various | Various |

The pellet compounding process was implemented on lab twin-screw extruder (Coperion ZSK-26Mc) with all components fed from the main throat. The compounding proceeded under screw rotation at 200 revolutions per minute (rpm) with 20 kilogram per hour (kg/h) of throughput. Temperature profiles for the compounding step are shown in Table 2:

**Table 2 - Temperature Profiles for Compounding**

| Compounder Type | | ZSK-26Mc |
|---|---|---|
| Barrel Size | mm | 1000 |
| Die | mm | 4.4 |
| Feed (Zone 0) Temperature | °C | 50 |
| Zone 1 temperature | °C | 50 |
| Zone 2 temperature | °C | 100 |
| Zone 3 temperature | °C | 200 |
| Zones 4-12 temperature | °C | 270 |
| Die temperature | °C | 270 |

Injection molding was conducted on an FANUC S-2000i molding machine for various bars for the tensile, flexural, impact, and HDT tests. Typical specimen injection molding conditions are shown in Table 3:

**Table 3 - Typical Specimen Injection Molding Conditions**

| Molding parameters | unit | Value |
|---|---|---|
| Pre-drying time | Hour | 4 |
| Pre-drying temperature | °C | 120 |
| Zone 1 temperature | °C | 270 |
| Zone 2 temperature | °C | 280 |
| Zone 3 temperature | °C | 280 |
| Nozzle temperature | °C | 285 |
| Mold temperature | °C | 90 |

Specific gravity was evaluated according to ASTM D792. Melt flow rate (MFR) was evaluated at 300 °C with a 1.2 kg load according to ASTM D1238. Tensile tests were evaluated at a speed of 50 millimeters per minute (mm/min) according to ASTM D638. Flexural testing was performed at a speed of 1.27 mm/min according to ASTMD790. Notched Izod impact (NII) testing was evaluated according to ASTM D256 at the temperatures indicated in Table 4B (Room Temperature (RT) is 23 °C). Heat distortion temperature (HDT) performance was evaluated at a 1.82 megapascal (MPa) load on a 3.2 mm thick bar according to ASTM D648. Flame retardancy (Vx) was evaluated using 1.0 mm thick bars according to UL94. FOT refers to flame out time. The p(FTP) value is a statistical evaluation of the robustness of UL94 V0 performance. When the p(FTP) value is one or nearly one the material is expected to consistently meet the UL94 V0 rating. Molecular weight (Mw) was determined using an Agilent 1260 infinity machine with dichloromethane solvent at 35 °C.

Damp heat hydro-aging (DH85 aging) was performed at a temperature of 85 °C and a relative humidity (RH) of 85% at durations of 500 hours (h), 1000 h, 2000 h, and 3000 h. Mw of the polycarbonate (PC) was evaluated at each time threshold and the percent retention calculated.

**Table 4A - Comparative and Example Compositions**

| Component (wt%) | C1 | Ex1 | Ex2 | C2 | Ex3 | Ex4 |
|---|---|---|---|---|---|---|
| Low flow PC homopolymer | 33.5 | 33.4 | 33.0 | 35.0 | 34.9 | 34.5 |
| High flow PC homopolymer | 40 | 40 | 40 | 40 | 40 | 40 |
| PC-Siloxane copolymer | 22.2 | 22.2 | 22.2 | 22.2 | 22.2 | 22.2 |
| Zirconium phosphate | - | 0.1 | 0.5 | - | 0.1 | 0.5 |
| TSAN | 0.5 | 0.5 | 0.5 | 0.5 | 0.5 | 0.5 |
| Phenoxy phosphazene | 3 | 3 | 3 | 1.5 | 1.5 | 1.5 |
| Other additives | 0.8 | 0.8 | 0.8 | 0.8 | 0.8 | 0.8 |
| Total (wt%) | 100 | 100 | 100 | 100 | 100 | 100 |

**Table 4B - Mechanical and FR Properties of Table 4A Compositions**

| Property | | C1 | Fx1 | Ex2 | C2 | Ex3 | Ex4 |
|---|---|---|---|---|---|---|---|
| Specific gravity | $g/cm^3$ | 1.19 | 1.19 | 1.19 | 1.19 | 1.19 | 1.19 |
| MFR | g/10min | 11.1 | 10.4 | 9.9 | 8.9 | 8.6 | 8.7 |
| Tensile modulus | MPa | 2232 | 2251 | 2243 | 2215 | 2226 | 2205 |
| Tensile elongation at Break | % | 84 | 76 | 97 | 55 | 85 | 82 |
| Tensile Strength at Break | MPa | 56 | 53 | 60 | 49 | 56 | 56 |
| Tensile strength at Yield | MPa | 58 | 58 | 58 | 58 | 58 | 58 |
| Flexural modulus | MPa | 2240 | 2240 | 2230 | 2210 | 2220 | 2190 |
| Flexural strength at Yield | MPa | 91 | 91 | 91 | 91 | 90 | 90 |
| HDT | °C | 113 | 113 | 112 | 116 | 116 | 116 |
| Notched Izod (NII) impact (23 °C) | J/m | 987 | 957 | 941 | 943 | 954 | 940 |
| NII (-30 °C) | J/m | 708 | 729 | 712 | 736 | 733 | 683 |
| NII (-40 °C) | J/m | 642 | 563 | 483 | 666 | 643 | 619 |
| Molecular Weight | PC | 54078 | 54382 | 54535 | 54409 | 54284 | 54306 |
| Vx@0.6mm, normal | p(FTP) | V0, 0.50 | V0, 0.83 | V0, 0.71 | - | - | - |
| | FOT 10(s) | 78.8 | 75.4 | 79.7 | - | - | - |
| Vx@0.6mm, aging | p(FTP) | V0, 0.28 | V0, 0.92 | V0, 0.79 | - | - | - |
| | FOT 10(s) | 99.8 | 77.8 | 75.1 | - | - | - |
| Vx@0.8mm, normal | p(FTP) | - | - | - | No rating | No rating | V1, 0.82 |
| | FOT 10(s) | - | - | - | No rating | No rating | 153.6 |
| Vx@0.8mm, aging | p(FTP) | - | - | - | No rating | No rating | V1, 0.97 |
| | FOT 10(s) | - | - | - | No rating | No rating | 89.4 |

**Table 4C - DH85 Aging Properties of Table 4A Compositions**

| DH85 aging | | C1 | Ex1 | Ex2 | C2 | Ex3 | Ex4 |
|---|---|---|---|---|---|---|---|
| Mw, 500 h (Retention) | PC | 50661 (93.7%) | 50670 (93.2%) | 52212 (95.7%) | 48755 (89.6%) | 49098 (90.4%) | 50494 (93.0%) |
| Mw, 1000 h (Retention) | PC | 45369 (83.9%) | 44068 (81.0%) | 46908 (86.0%) | 42613 (78.3%) | 47262 (87.1%) | 46263 (85.2%) |

(continued)

| DH85 aging | | C1 | Ex1 | Ex2 | C2 | Ex3 | Ex4 |
|---|---|---|---|---|---|---|---|
| Mw, 2000 h (Retention) | PC | 31959 (59.1 %) | 31856 (58.6%) | 38055 (69.8%) | 32551 (59.8%) | 35081 (64.6%) | 38755 (71.4%) |
| Mw, 3000 h (Retention) | PC | 24482 (45.3%) | 25051 (46.1%) | 32929 (60.4%) | 26483 (48.7%) | 28290 (52.1%) | 35077 (64.6%) |

As demonstrated in the examples, addition of 0.1-0.5 wt% of zirconium phosphate improved flame retardant (FR) performance. In Ex1 and Ex2, FOT and p(FTP) are improved as compared to C1, which indicates that the example compositions have more robust V0 performance at 0.6 mm than the comparative composition. Example composition Ex4 achieved a V1 rating at 0.8 mm, while comparative composition C2 could not. Additionally, example composition Ex3 had improved FOT and p(FTP) performance as compared to C2.

The acidic nature of phosphorus FR agents is believed to decrease the hydro-stability of the PC matrix. Addition of zirconium phosphate in Ex1-Ex4 provided improved Mw retention after 2000 hour DH85 treatment as compared to C1 and C2, from about 59% to about 70%. While not being bound by theory, it is thought that the zirconium phosphate attracted phosphorus - improving flame retardancy by preventing the polycarbonate matrix from degrading at high humidity conditions.

Other mechanical properties, such as modulus, strength, HDT, and even Izod impact compared favorably between the comparative and example compositions.

The above description is intended to be illustrative, and not restrictive. For example, the above-described examples (or one or more aspects thereof) may be used in combination with each other. Other aspects can be used, such as by one of ordinary skill in the art upon reviewing the above description. The Abstract is provided to comply with 37 C.F.R. § 1.72(b), to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed aspect. Thus, the following claims are hereby incorporated into the Detailed Description as examples or aspects, with each claim standing on its own as a separate aspect, and it is contemplated that such aspects can be combined with each other in various combinations or permutations. The scope of the disclosure should be determined with reference to the appended claims, along with the full scope of equivalents to which such claims are entitled.

## Claims

**1.** A thermoplastic composition comprising:

from about 10 wt% to about 99 wt% of a polycarbonate homopolymer component;
from about 1 wt% to about 40 wt% of a polycarbonate-siloxane copolymer component;
from about 0.1 wt% to about 15 wt% of a phosphorous-based flame retardant; and
from about 0.01 wt% to about 5 wt% zirconium phosphate,

wherein the combined weight percent value of all components does not exceed 100 wt%, and all weight percent values are based on the total weight of the composition.

**2.** The thermoplastic composition according to claim 1, wherein the polycarbonate-siloxane copolymer has a siloxane content of from about 5 wt% to about 45 wt%, based on the total weight of the polycarbonate-siloxane copolymer component.

**3.** The thermoplastic composition according to claim 2, wherein the polycarbonate-siloxane copolymer has a siloxane content of from about 15 wt% to about 25 wt%.

**4.** The thermoplastic composition according to any of claims 1 to 3, wherein the composition further comprises from greater than 0 wt% to about 2 wt% of a polytetrafluoroethylene (PTFE) component.

**5.** The thermoplastic composition according to any of claims 1 to 4, wherein the composition comprises from about 0.01

wt% to 1 wt% zirconium phosphate.

**6.** The thermoplastic composition according to any of claims 1 to 5, wherein the composition comprises at least 1.5 wt% of the phosphorous-based flame retardant.

**7.** The thermoplastic composition according to any of claims 1 to 6, wherein the composition has a total siloxane content of from about 0.5 wt% to about 15 wt%.

**8.** The thermoplastic composition according to claim 7, wherein the composition has a total siloxane content of from about 2 wt% to about 8 wt%.

**9.** The thermoplastic composition according to any of claims 1 to 8, wherein the composition further comprises from greater than 0 wt% to about 1 wt% of at least one additional additive.

**10.** The thermoplastic composition according to claim 9, wherein the at least one additional additive comprises an acid scavenger, an anti-drip agent, an antioxidant, an antistatic agent, a chain extender, a colorant, a release agent, a flow promoter, a lubricant, a plasticizer, a quenching agent, a UV reflecting additive, a blowing agent, a filler component, or a combination thereof.

**11.** The thermoplastic composition according to any of claims 1 to 10, wherein the polycarbonate homopolymer component has a molecular weight (Mw) retention of at least 60% after 2000 hours of heat aging at a temperature of 85 °C and 85% relative humidity.

**12.** The thermoplastic composition according to any of claims 1 to 11, wherein the composition has a notched Izod impact strength (NII) of at least 450 joules per meter (J/m) at a temperature of -40 °C, wherein NII is evaluated according to ASTM D256.

**13.** An article comprising the thermoplastic composition according to any of claims 1 to 12.

**14.** The article according to claim 13, wherein the article is a personal accessory, an energy storage device, an electrical device, or a vehicle interior.

Europäisches Patentamt
European Patent Office
Office européen des brevets

# EUROPEAN SEARCH REPORT

Application Number
EP 23 20 3052

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/389223 A1 (HE YUNFEI [CN] ET AL) 8 December 2022 (2022-12-08) * paragraph [0002]; claims 1,12; examples 10-12; table 5 * ----- | 1-14 | INV. C08L69/00 |

TECHNICAL FIELDS SEARCHED (IPC)

C08L

1

The present search report has been drawn up for all claims

| Place of search | Date of completion of the search | Examiner |
|---|---|---|
| The Hague | 9 January 2024 | Goulis, Panagiotis |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO.

EP 23 20 3052

This annex lists the patent family members relating to the patent documents cited in the above-mentioned European search report.
The members are as contained in the European Patent Office EDP file on
The European Patent Office is in no way liable for these particulars which are merely given for the purpose of information.

09-01-2024

| Patent document cited in search report | Publication date | Patent family member(s) | Publication date |
|---|---|---|---|
| US 2022389223 A1 | 08-12-2022 | CN 115449204 A | 09-12-2022 |
| | | EP 4101893 A1 | 14-12-2022 |
| | | US 2022389223 A1 | 08-12-2022 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- *CHEMICAL ABSTRACTS*, 80-05-7